Europäisches Patentamt

European Patent Office

Office européen des brevets

(19)

(11) Veröffentlichungsnummer: **0 511 645 A1**

# (12) EUROPÄISCHE PATENTANMELDUNG

(21) Anmeldenummer: **92107296.3**

(22) Anmeldetag: **29.04.92**

(51) Int. Cl.⁵: **F24D 3/16**

(30) Priorität: **29.04.91 DE 4113998**

(43) Veröffentlichungstag der Anmeldung:
**04.11.92 Patentblatt 92/45**

(84) Benannte Vertragsstaaten:
**AT BE CH DE DK ES FR GB GR IT LI LU NL PT SE**

(71) Anmelder: **LINDNER AG**
**Bahnhofstrasse 29**
**W-8382 Arnstorf(DE)**

(72) Erfinder: **Steiner, Josef**
**Kirlstrasse 7**
**A-3370 Ybbs(AT)**

(74) Vertreter: **Klingseisen, Franz, Dipl.-Ing.**
**Dr. F. Zumstein Dipl.-Ing. F. Klingseisen**
**Bräuhausstrasse 4**
**W-8000 München 2(DE)**

(54) **Wand- oder Deckenverkleidung mit einer Heiz- und/oder Kühleinrichtung.**

(57) Bei einer Wand- oder Deckenverkleidung mit auf deren Rückseite vorgesehener Heiz- und/oder Kühleinrichtung in Form von Leitungen, die auf der raumseitigen Verkleidungswand anliegen, wird zur Verbesserung der Wärmeübertragung auf der raumabgewandten Seite der Leitungen (3) ein Infrarot-Reflektor (4) angeordnet, wobei zwischen Infrarot-Reflektor (4) und Verkleidungswand (1) ein Luftspalt (5) vorgesehen ist.

Fig. 1

EP 0 511 645 A1

Die Erfindung betrifft eine Wand- oder Deckenverkleidung nach dem Oberbegriff des Anspruchs 1.

Eine Wand- oder Deckenverkleidung dieser Art ist aus der DE-OS 28 24 941 bekannt, wobei die raumseitige Oberfläche der die Verkleidung bildenden Elemente aus einem Lochblech besteht, das auf der raumabgewandten Seite mit Kanälen wärmeleitend verbunden und mit einem schalldämpfenden und wärmedämmenden Stoff belegt ist. An den Elementen werden als Kanäle Hohlprofile angebracht, die auch eine statische Funktion als Rahmen übernehmen können. Dieser Aufbau ist in der Herstellung relativ aufwendig und teuer.

Bei der aus EP 0 299 909 A1 bekannten Raumdecke aus Metallplatten sind flexible Röhren mattenförmig zusammengefaßt, die lose und direkt auf der Metallplatte aufliegen. Über den Röhren ist eine schalldämmende Schicht aufgelegt. Bei dieser bekannten Ausführungsform wird eine gleichmäßige und schnelle Erwärmung der raumseitigen Oberfläche nicht in dem erwünschten Maß erreicht, weil die Wärmeübertragung zwischen den Kunststoffröhren und Metallplatte nicht gut ist.

Der Erfindung liegt die Aufgabe zugrunde, eine Wand- oder Deckenverkleidung der eingangs angegebenen Art so auszubilden, daß bei einfachem und kostengünstigem Aufbau dennoch eine schnelle und gleichmäßige Temperaturverteilung auf der raumseitigen Oberfläche der Verkleidung erzielt wird.

Diese Aufgabe wird erfindungsgemäß durch die Merkmale im Kennzeichen des Anspruchs 1 gelöst. Durch die Anordnung eines Infrarot-Reflektors auf der raumabgewandten Seite der Heiz- oder Kühlmedium führenden Kanäle wird eine sehr gute Wärmeübertragung auf die raumseitige Oberfläche der Verkleidung erreicht, so daß eine schnelle und gleichmäßige Temperaturverteilung an der Wand- oder Deckenverkleidung erzielt wird. Da der Infrarot-Reflektor als Folie ausgebildet sein kann, ergibt sich ein einfacher und kostengünstiger Aufbau einer derartigen für Heiz- oder Kühlzwecke vorgesehenen Wand- oder Deckenverkleidung.

Vorteilhafte Ausgestaltungen der Erfindung sind in der nachfolgenden Beschreibung und in den weiteren Ansprüchen angegeben.

Beispielsweise Ausführungsformen der Erfindung werden nachfolgend anhand der Zeichnung näher erläutert. Es zeigen

Fig. 1    einen Teilschnitt durch ein Deckenelement,

Fig. 2    eine schematische Draufsicht auf ein derartiges Element,

Fig. 3    eine weitere Ausführungsform in der Darstellung nach Fig. 1,

Fig. 4    eine abgewandelte Ausführungsform, und

Fig. 5    abgewandelte Querschnittsformen der Rohrleitungen.

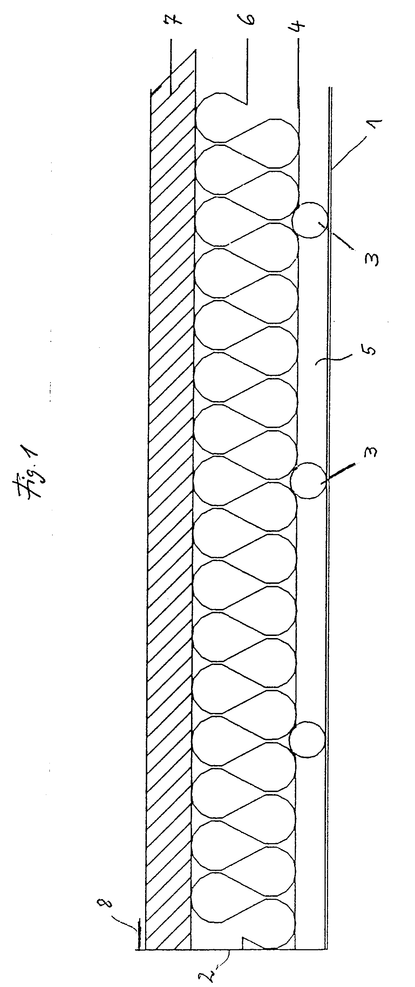

Bei dem dargestellten Ausführungsbeispiel besteht eine Deckenverkleidung aus einzelnen Elementen, von denen eines in einem Teilschnitt in Fig. 1 wiedergegeben ist. Mit 1 ist ein gelochtes oder durchgehendes, plattenförmiges Metallblech bezeichnet, das auch beschichtet oder mit einem Vlies belegt sein kann und auf dem Umfang einen abgewinkelten Rand 2 aufweist.

Auf dem Metallblech 1 liegen in vorgegebenen Abständen bspw. in Form einer Rohrschlange Leitungen 3 auf, über denen ein Infrarot-Reflektor 4 bspw. in der Form einer Folie so angeordnet ist, daß zwischen Infrarot-Reflektor 4 und Metallblech 1 ein Luftspalt 5 vorhanden ist. Über dem Infrarot-Reflektor 4 ist eine Dämmschicht 7 bspw. aus Mineralwolle oder dgl. angeordnet, über der eine steife Platte 7 angeordnet ist, deren Rand durch eine Abwinkelung 8 am Rand 2 des Metalldeckenelementes 1 gehalten wird. Die Platte 7 kann aus Gipsfasermaterial, Gipskarton, Blech, aus einer Spanplatte oder dgl. bestehen.

Die Rohrleitungen 3 liegen lose auf dem Metallblech 1 auf und sie bestehen vorzugsweise aus Kupfer oder Aluminium. Es können auch Rohrleitungen aus einem anderen Material, wie Kunststoff vorgesehen sein. Vorzugsweise wird aber für die Rohrleitungen 3 ein gut wärmeleitendes Material verwendet. Die Rohrleitungen 3 werden durch die längs des Randes bei 8 eingespannte Platte 7 am Metallblech 1 anliegend gehalten. Trotzdem die Auflagefläche zwischen Rohrleitungen 3 und Metallblech 1 gering ist, wird eine schnelle und gleichmäßige Aufheizung der raumseitigen Oberfläche des Metallblechs 1 dadurch erreicht, daß der Infrarot-Reflektor 4 über den Luftspalt 5 die von den Rohrleitungen 3 abgegebene Wärme auf das Metallblech 1 reflektiert. Vorzugsweise wird die raumabgewandte Seite der Verkleidungswand 1 zumindest zwischen den Rohrleitungen 3 mit einem Wärmestrahlung absorbierenden Material, wie bspw. einem schwarzen Lack beschichtet, um die Wärmeübertragung vom Infrarot-Reflektor 4 auf die Verkleidungswand 1 zu verbessern. Versuche haben ergeben, daß durch den Infrarot-Reflektor die Oberfläche zwischen den Rohrleitungen 3 schnell auf nahezu die gleiche Temperatur aufgeheizt wird, wie sie an der Wand der Rohrleitungen 3 vorhanden ist.

Der Infrarot-Reflektor 4 kann bspw. eine Aluminiumfolie sein. Vorzugsweise wird eine Kunststofffolie vorgesehen, insbesondere eine schwarze, glänzende PE-Folie, die auch zur Verpackung der üblicherweise aus Mineralwolle bestehenden Dämmschicht 6 verwendet wird.

Wenn zur Schallabsorption ein gelochtes Metallblech 1 vorgesehen ist, kann der Infrarot-Reflektor 4 ebenfalls gelocht sein, insbesondere dann, wenn der Infrarot-Reflektor 4 einen relativ steifen, schallreflektierenden Aufbau hat, um einen Schalldurchtritt durch die Lochung bis zur Dämmschicht 6 zu ermöglichen.

Vorzugsweise wird als Infrarot-Reflektor 4 eine dünne, bis max. 30 µm dicke Folie vorgesehen, die auf Grund Ihrer hohen Flexibilität nicht gelocht zu werden braucht, um eine gute schallabsorbierende Wirkung zu erzielen. Versuche haben ergeben, daß eine ungelochte dünne PE-Folie als Infrarot-Reflektor 4 überraschenderweise die gleiche Wirkung hinsichtlich Temperaturverteilung wie eine gelochte Aluminiumfolie hat, verbunden mit einer gegenüber einer gelochten Aluminiumfolie verbesserten Schallabsorption.

Auf der Oberseite des in Fig. 1 dargestellten Deckenelementes kann über der Gipsplatte 7 noch zusätzlich ein Metallblech in das Deckenelement eingelegt sein, um eine begehbare Decke auszubilden.

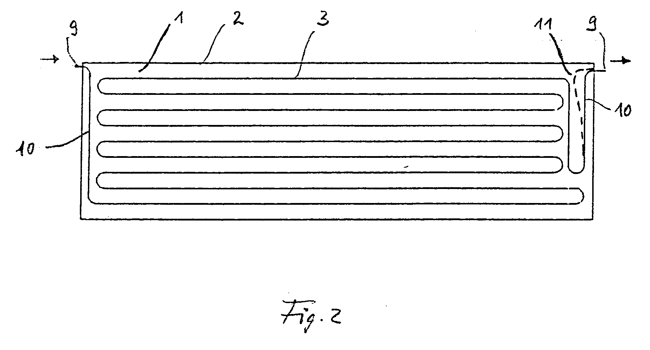

Fig. 2 zeigt in einer schematischen Ansicht die Verlegung der Rohrleitungen 3 als Rohrschlange, wobei vorzugsweise auf der einen Schmalseite eines rechteckigen Elementes der Vorlauf des Kühl/Heizmediums, insbesondere Wasser, und auf der gegenüberliegenden Schmalseite der Rücklauf vorgesehen ist, wie durch Pfeile angedeutet. Die Enden 9 der Rohrleitung 3 sind durch Bohrungen in dem abgewinkelten Rand 2 des Blechelementes geführt, wobei sich sowohl am Vor- als auch am Rücklauf an das Rohrleitungsende 9 ein relativ zu diesem abgewinkelter Abschnitt 10 der Rohrleitung anschließt, so daß die Leitungsenden 9 nach innen gedrückt und am Rand des Blechelementes eingeklemmt werden können, wie durch eine gestrichelte Linie bei 11 in Fig. 2 angedeutet ist. Auf diese Weise ist es möglich, für den Transport der vorgefertigten Elemente die Leitungsenden 9 nach innen zu drücken und in dieser Stellung zu fixieren, so daß sie während des Transports und bei der Handhabung auf der Baustelle nicht über den Rand des vorgefertigten Elementes vorstehen, während für die Montage durch einen einfachen Handgriff das Leitungsende aus seiner Fixierung gelöst werden kann, so daß es durch Zurückfedern des Leitungsabschnitts 10 wieder nach außen vorsteht, worauf der erforderliche Leitungsanschluß vorgenommen werden kann. Bei dem in Fig. 2 dargestellten Ausführungsbeispiel schließt sich an das Vorlaufende 9 eine sich über die Breite des Elementes erstreckender Leitungsabschnitt 10 an, von dem aus die Rohrschlange gelegt ist, während am Rücklaufende 9 zur Ausbilung eines federnden Leitungsabschnittes 10 eine gesonderte Schleife vor Austritt des Rücklaufendes gelegt ist, wobei sich diese gesonderte Schleife quer zu den Schleifen der Rohrschlange erstreckt.

Anstelle der Rohrleitungen 3 können auch elektrische Heizleitungen bei dem beschriebenen Aufbau einer Wand- oder Deckenverkleidung vorgesehen sein.

In der gleichen Weise wie das beschriebene Deckenelement kann auch ein Wandelement ausgebildet werden. Ebenso ist es möglich, den beschriebenen Aufbau bei einer Bodenverkleidung, bspw. bei einem Hohlraumboden vorzusehen, wobei das Metallblech 1 in Fig. 1 die Bodenoberseite bildet bzw. im oberen Bereich des Bodenaufbaus liegt. Bei einer solchen Ausführungsform kann es zweckmäßig sein, den Luftspalt 5 zwischen den Leitungen 3 mit einem gut wärmeleitenden Material aufzufüllen, das zugleich als Distanzhalter für die einzelnen Abschnitte der Rohrschlange dient.

Bei einem praktischen Ausführungsbeispiel eines Deckenelementes wird als Heiz- bzw. Kühlleitung 3 ein Kupferrohr von 6 mm Außendurchmesser und etwa 4,5 mm Innendurchmesser in einem Abstand von 4 cm auf dem Metallblech 1 verlegt, wobei die Strömungsgeschwindigkeit des die Rohrleitung 3 durchströmenden Wassers so eingestellt wird, daß man möglichst laminare Strömung in der Rohrleitung 3 erhält.

Vorzugsweise werden zwischen den einzelnen Abschnitten der Rohrschlange nicht dargestellte Distanzhalter angeordnet, die die einzelnen Leitungsabschnitte in einem gleichbleibenden Abstand voneinander halten und die Rohrschlange versteifen.

Vorzugsweise wird eine nicht dargestellte Kunststoffkappe vorgesehen, mittels der das Rohrleitungsende 9 abgedeckt und in einer Bohrung in den Seitenrand 2 des Elementes in eingedrücktem Zustand fixiert werden kann, wobei diese Kappe die Rohrleitung bei der Lagerung und beim Transport zugleich vor Verschmutzung schützt. Durch Abnehmen der Kappe kann das Rohrleitungsende durch die Bohrung nach außen zurückfedern, so daß dann der erforderliche Anschluß vorgenommen werden kann.

Der Luftspalt 5 zwischen Metallblech 1 und Infrarot-Reflektor 4 ermöglicht auch eine Konvektionsströmung der darin befindlichen Luft, wodurch eine gleichmäßige Wärmeverteilung insbesondere auf den zwischen den Rohrleitungen 3 liegenden Abschnitten des Metallblechs 1 unterstützt wird.

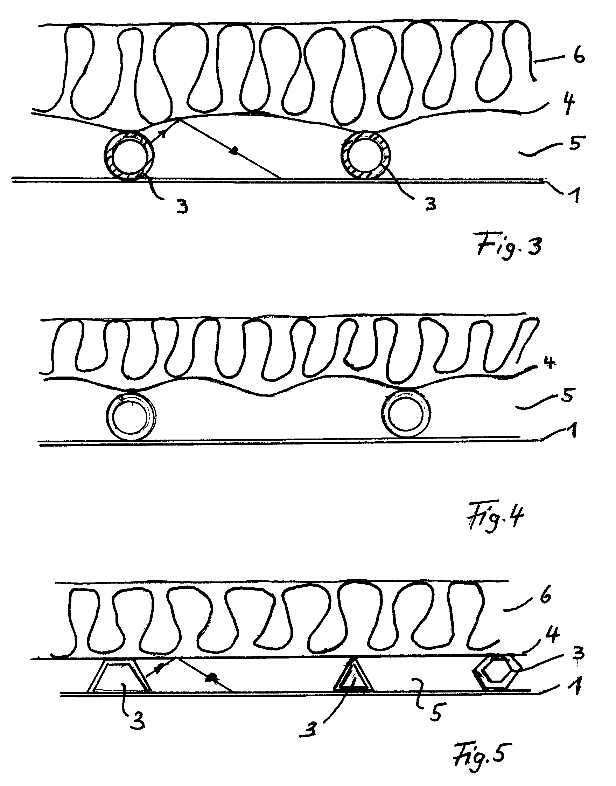

Zur weiteren Unterstützung einer gleichmäßigen Aufheizung des Metallblechs 1 kann der Infrarot-Reflektor 4 zwischen den Rohrleitungen 3 nach Art eines Hohlspiegels leicht gewölbt ausgebildet sein, wie dies Fig. 3 schematisch zeigt.

Weiterhin ist es möglich, den Infrarot-Reflektor wellblechartig so auszubilden, daß zwischen zwei Rohrleitungen 3 zwei gleiche Wölbungen des Reflektors symmetrisch angeordnet sind, wie Fig. 4 schematisch zeigt. Durch diese gewölbte Ausgestaltung des Infrarot-Reflektors 4 kann eine Konzentration der vom Reflektor reflektierten Wärmestrahlung auf den Mittelabschnitt des Metallblechs 1 zwischen zwei Rohrleitungen 3 erreicht werden, nachdem an den an den Rohrleitungen 3 anliegenden Abschnitten des Metallblechs ohnehin durch den direkten Kontakt mit den Rohrleitungen ein guter Wärmeübergang vorhanden ist.

Zur Verbesserung des direkten Wärmeübergangs an den Rohrleitungen einerseits und gleichzeitig zur Verbesserung der Reflektorwirkung andererseits können auch dreieck- oder trapezförmige Rohrquerschnitte anstelle von runden Rohrquerschnitten vorgesehen werden, wie dies Fig. 5 zeigt. Es können auch andere Polygonquerschnitte vorgesehen werden, die zum Reflektor 4 und zum Metallblech 1 hin geneigte Seitenflächen aufweisen. Hierdurch wird eine größere Auflagefläche der Rohrleitung an dem Metallblech 1 mit entsprechend verbessertem Wärmeübergang und eine auf den Infrarot-Reflektor bzw. direkt auf das Metallblech gerichtete Strahlungsfläche durch die beiderseits an der Rohrleitung geneigten Flächen ausgebildet.

Der Luftspalt 5 wird zweckmäßigerweise durch den auf den Rohrleitungen 3 aufliegenden Infrarot-Reflektor 4 zwischen zwei Rohrleitungen 3 in der Querschnittsansicht z.B. nach Fig. 1 oder 3 im wesentlichen geschlossen gehalten. Es ist aber auch möglich, den Infrarot-Reflektor 4 in einem Abstand über den Rohrleitungen 3 zu halten, beispielsweise durch nicht dargestellte Distanzhalter zwischen Metallblech 1 und Reflektor 4, so daß der Reflektor 4 nicht auf den Rohrleitungen 3 aufliegt.

Der Infrarot-Reflektor 4 kann insbesondere bei den Ausführungsformen nach Fig. 3 und 4 aus raumseitig hochglanzpoliertem, dünnem Aluminiumblech bestehen. Bei der Ausführungsform nach Fig. 1 kann auch eine metallbeschichtete bzw. metalldampfbeschichtete Kunststoffolie vorgesehen sein.

Die beschriebenen Anordnungen sind nicht nur bei Heizleitungen vorteilhaft, bei denen der Strahlungsverlauf von den wärmeren Rohrleitungen 3 über den Reflektor 4 auf die zu erwärmende Verkleidungswand bzw. das Metallblech 1 verläuft, sondern ebenso auch für Kühlzwecke geeignet, wobei die durch ein Kühlmedium gekühlten Rohrleitungen 3 über den Reflektor 4 Wärmestrahlung von dem wärmeabgebenden Metallblech 1 aufnehmen.

**Patentansprüche**

1. Wand- oder Deckenverkleidung mit auf deren Rückseite vorgesehener Heiz- und/oder Kühleinrichtung in Form von Leitungen, die auf der raumseitigen Verkleidungswand anliegen,

dadurch gekennzeichnet,
daß auf der raumabgewandten Seite der Leitungen (3) ein Infrarot-Reflektor (4) angeordnet und ein Luftspalt (5) zwischen Verkleidungswand (1) und Infrarot-Reflektor (4) vorgesehen ist.

2. Wand- oder Deckenverkleidung nach Anspruch 1,
dadurch gekennzeichnet,
daß der Infrarot-Reflektor (4) auf den Leitungen (3) aufliegt.

3. Wand- oder Deckenverkleidung nach den Ansprüchen 1 und 2,
dadurch gekennzeichnet,
daß der Infrarot-Reflektor (4) aus einer Kunststoffolie mit glänzender Oberfläche oder einer Aluminiumfolie bzw. aus einem dünnen Aluminiumblech besteht.

4. Wand- oder Deckenverkleidung nach den Ansprüchen 1 bis 3,
dadurch gekennzeichnet,
daß der Infrarot-Reflektor (4) gelocht ausgebildet ist.

5. Wand- oder Deckenverkleidung nach den vorhergehenden Ansprüchen,
dadurch gekennzeichnet,
daß der Infrarot-Reflektor (4) abschnittsweise gewölbt ausgebildet ist.

6. Wand- oder Deckenverkleidung nach den vorhergehenden Ansprüchen, wobei die Verkleidung in Form von plattenförmigen Elementen ausgebildet ist,
dadurch gekennzeichnet,
daß auf der raumabgewandten Seite des Infrarot-Reflektors (4) eine Dämmschicht (6) angeordnet ist, auf der eine steife Platte (7) aufliegt, die durch den abgewinkelten Rand (2,8) des Verkleidungsbleches (1) an der Dämmschicht (6) anliegend gehalten ist und über diese die Leitungen (3) an dem Verkleidungsblech (1) anliegend hält.

7. Wand- oder Deckenverkleidung nach Anspruch 6,
dadurch gekennzeichnet,
daß sich an die an den Seiten des Elementes vorstehenden Leitungsenden (9) jeweils ein abgewinkelter Leitungsabschnitt (10) anschließt, der eine elastisch nachgiebige Verformung zum Einschieben der Leitungsenden (9) in das Element zuläßt.

8. Wand- oder Deckenverkleidung nach Anspruch 7,
dadurch gekennzeichnet,
daß eine Kunststoffkappe zum Abdecken und Fixieren des in das Element eingeschobenen Leitungsendes (9) vorgesehen ist.

9. Wand- oder Deckenverkleidung nach den vorhergehenden Ansprüchen,
dadurch gekennzeichnet,
daß die raumabgewandte Seite der gut wärmeleitenden Verkleidungswand (1) mit einer Wärmestrahlung absorbierenden Beschichtung versehen ist.

10. Wand- oder Deckenverkleidung nach den vorhergehenden Ansprüchen,
dadurch gekennzeichnet,
daß die Leitungen (3) aus einem gut wärmeleitenden Material einen dreieck-, trapezförmigen oder sechseckigen Querschnitt haben.

Fig. 1

EP 0 511 645 A1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 265 982 (CHAMPROBERT) | 1,10 | F24D3/16 |
| Y | * das ganze Dokument * | 2,6,9 | |
| | --- | | |
| Y | CH-A-382 945 (APPARATE UND METALLBAU WALD AG) | 2,6 | |
| | * Ansprüche 4,5; Abbildung 2 * | | |
| | --- | | |
| Y | CH-A-361 903 (COMPAGNIE GENERAL D'INSONORATION) | 9 | |
| | * Seite 2, Zeile 25 - Seite 2, Zeile 27; Abbildungen * | | |
| | --- | | |
| A | EP-A-0 075 143 (MERO-WERKE DR.ING MAX MENGERINGHAUSEN GMBH & CO.) | 1 | |
| | * Seite 8, Zeile 17 - Seite 8, Zeile 23 * | | |
| | ----- | | |

**RECHERCHIERTE SACHGEBIETE (Int. Cl.5)**

F24D

Der vorliegende Recherchenbericht wurde für alle Patentansprüche erstellt

| Recherchenort | Abschlußdatum der Recherche | Prüfer |
|---|---|---|
| DEN HAAG | 23 JUNI 1992 | VAN GESTEL H.M. |